# EUROPEAN PATENT SPECIFICATION

(11) **EP 1 100 001 B1**
(45) Date of publication and mention of the grant of the patent: **13.08.2003**
(21) Application number: 00203639.0
(22) Date of filing: 18.10.2000
(51) Int. Cl.: G06F 3/06

(54) **Storage system supporting file-level and block-level accesses**
Speichersystem mit Unterstützung von Dateistufenzugriffen und Blockstufenzugriffen
Système de stockage permettant des accès au niveau fichier et au niveau bloc

(30) Priority: 25.10.1999 US 427377
(43) Date of publication of application: 16.05.2001
(73) Proprietor: SUN MICROSYSTEMS, INC., Palo Alto, California 94303 (US)
(72) Inventor: Khalidi, Yousef A., Cupertino, CA 95014 (US)
(74) Representative: Hanna, Peter William Derek

(56) References cited:
- US-A- 5 592 662
- US-A- 5 619 690
- PATENT ABSTRACTS OF JAPAN vol. 1997, no. 04, 30 April 1997 (1997-04-30) & JP 08 335180 A (MITSUBISHI ELECTRIC CORP), 17 December 1996 (1996-12-17)

## Description

### BACKGROUND

### Field of the Invention

The present invention relates to secondary storage systems for computers. More specifically, the present invention relates to a secondary storage system that supports both file-level and block-level access protocols.

### Related Art

As processor clock speeds continue to increase at an exponential rate and the price of semiconductor memories continues to fall, it is becoming possible to incorporate larger amounts of processing power and semiconductor memory into secondary storage devices, such as disk drives. This additional processing power and memory is being used to buffer requests into secondary storage devices in order to minimize the number of accesses to rotating storage. Accessing rotating storage can severely limit processor performance because at current processor clock speeds it is possible to execute millions of instructions in the time it takes to retrieve a single block of data from rotating storage.

Unfortunately, protocols that are typically used by computers to communicate with secondary storage systems were designed presuming that the secondary storage systems possess very little processing power and semiconductor memory. Common protocols, such as the SCSI protocol, present device-specific commands at the block-level. For example, a read operation to a disk may include a device number that identifies a disk to which the read operation is directed, and a block or track number, which specifies the block or track that is to be retrieved from the disk during the read operation.

Upon receiving a block-level command, intelligent secondary storage systems typically process the command using a software emulator that emulates an unsophisticated disk drive. This software emulator uses the block-level request to lookup entries in a cache of disk blocks that are maintained within semiconductor memory in the secondary storage system. In some cases, this block-level access ultimately results in an access to the disk. This access to the disk must pass through a device driver for the disk, which converts the access back into a form that is suitable for communication with the disk.

Consequently, many of the processing operations performed by an intelligent secondary storage system are spent undoing a conversion into a block-level format and then redoing the conversion to create a request for the disk drive.

What is needed is an intelligent secondary storage system that is able to process higher-level file access commands so that lower-level format conversion operations do not need to be undone and then redone by the storage system.

However, if such a storage system is developed, this storage system would only be compatible with computer systems that are configured to send higher-level file access commands to a storage device. Such a storage system would not be compatible with existing computer systems that provide commands in a block-level format.

The document US-A-5 619 690 discloses a system in which a computer can send access requests to a disk storage both in a high-level file system access format and in a block-level format

What is needed is an intelligent storage system that is able to process both higher-level file access commands and lower-level block access commands.

### SUMMARY

The present invention is defined by the independent claims.

One embodiment of the present invention provides a storage system that services access requests received from a computer system. In a first mode of operation, the storage system receives a file system access from the computer system across a communication channel. This file system access includes an identifier for a file and an offset into the file. The storage system translates this file system access into a block-level access, which includes a device number and a block number. This block-level access is forwarded to a storage device. In a second mode of operation, the storage system receives block-level access, which includes a device number and a block number. The storage system forwards this block-level access to the storage device.

In a variation on the above embodiment, during the second mode of operation, after receiving the block-level access, the system passes the block-level access through a storage device emulator, then through a cache for the storage device. If the block level access cannot be serviced within the cache, the system passes the block-level access through a driver for the storage device before forwarding the block-level access to the storage device.

In a variation on the above embodiment, the file system access is received from a client-side portion of a file system and is translated into a block-level access within a server-side portion of the file system.

In a variation on the above embodiment, the file system access is received from one of a plurality of processors coupled to the storage system.

### BRIEF DESCRIPTION OF THE FIGURES

FIG. 1 illustrates a storage system coupled to a plurality of computers in accordance with an embodiment of the present invention.
FIG. 2 illustrates system layers involved in performing a file system access wherein block-level commands are transferred to a storage system in accordance with an embodiment of the present invention.
FIG. 3 illustrates system layers involved in performing a file system access wherein file-level commands are transferred to a storage system in accordance with an embodiment of the present invention.
FIG. 4A illustrates some of the items within a file system access in accordance with an embodiment of the present invention.
FIG. 4B illustrates some of the items within a block-level access in accordance with an embodiment of the present invention.
FIG. 5 is a flow chart illustrating operation of a storage system in accordance with an embodiment of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The data structures and code described in this detailed description are typically stored on a computer readable storage medium, which may be any device or medium that can store code and/or data for use by a computer system. This includes, but is not limited to, magnetic and optical storage devices such as disk drives, magnetic tape, CDs (compact discs) and DVDs (digital video discs), and computer instruction signals embodied in a transmission medium (with or without a carrier wave upon which the signals are modulated). For example, the transmission medium may include a communications network, such as the Internet.

### Storage System

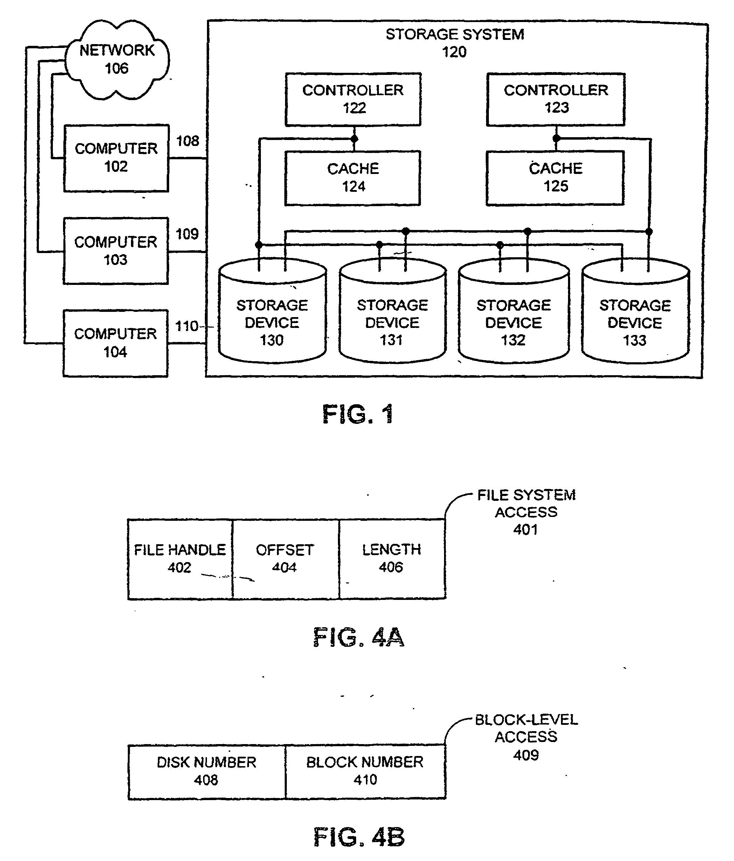

FIG. 1 illustrates storage system 120 coupled to computers 102-104 in accordance with an embodiment of the present invention. Computers 102-104 can include any type of computer that can use storage system 120 to store code/and or data. This includes, but is not limited to, computers based upon microprocessors, mainframe processors, device controllers, and computational engines within appliances. Note that computers 102-104 may include semiconductor memory in addition to other computer system components.

In the illustrated embodiment, computers 102-104 are coupled together through network 106. Network 106 may include any type of wire or wireless communication channel capable of coupling together computers 102-104. This includes, but is not limited to, a local area network, a wide area network, or a combination of networks. In one embodiment of the present invention, network 106 includes the Internet.

In one embodiment of the present invention, computers 102-104 provide fault-tolerance by allowing failovers between computers 102-104. For example, suppose computer 102 is acting as a primary server and computer 103 is acting as a backup secondary server. If computer 102 fails, computer 103 can take over the server functions performed by computer 102.

Note that the present invention can be applied to any type of computer system that includes an intelligent storage system 120 for storing code and/or data. For example, the present invention can be applied to a non-fault-tolerant single processor system.

Storage system 120 includes controller 122 and cache 124, which are coupled to storage devices 130-133. Storage system 120 additionally includes controller 123 and cache 125, which are similarly coupled to storage devices 130-133.

Note that providing two controllers 122-123 and two caches 124-125 allows storage system 120 to provide fault tolerance in cases where one of the two controllers 122-123 or one of the two caches 124-125 fails. Also note that the present invention can additionally apply to non-fault-tolerant storage systems that include only a single controller and a single cache.

Controllers 122-123 can include any type of computational devices that can be configured to act as controllers. During operation, controllers 122-123 manage a number of components, including storage devices 130-133 and caches 124-125. Controllers 122-123 can also manage mirroring of caches 124-125. This keeps caches 124 and 125 consistent with each other for fault-tolerance purposes.

Caches 124 and 125 can include any type of random access memory for caching data from computers 102-104. In one embodiment of the present invention, caches 124-125 include non-volatile random access memory based upon flash memory or battery backed up memory. This allows a transaction to be permanently committed into non-volatile storage in caches 124-125 without having to wait for storage devices 130-133.

Storage devices 130-133 can include any type of non-volatile storage devices for storing code and/or data for computers 102-104. This includes, but is not limited to, magnetic storage devices (such as disk drives or tape drives), optical storage devices and magneto-optical storage devices. This also includes non-volatile semiconductor storage devices, such as flash memories or battery-backed up random access memories. In one embodiment of the present invention storage, storage devices 130-133 include disk drives.

Note that computer 102-104 are coupled with storage system 120 through communication links 108-110. In embodiment of the present invention, communication links 108-110 adhere to the fiber channel standard.

The system illustrated in FIG. 1 operates generally as follows. A computer, such as computer 102, makes an access request, such as a read operation, to a storage system 120. Controller 122 within storage system 120 receives the access request and tries to satisfy the access request within local cache 124. If necessary, controller 122 sends a request to a storage device, such as storage device 130, to complete the request. If the access is a read operation, storage device 130 returns the requested data, and controller 122 forwards the requested data back to computer 102.

### Layers Involved in Sending Block-Level Commands to Storage System

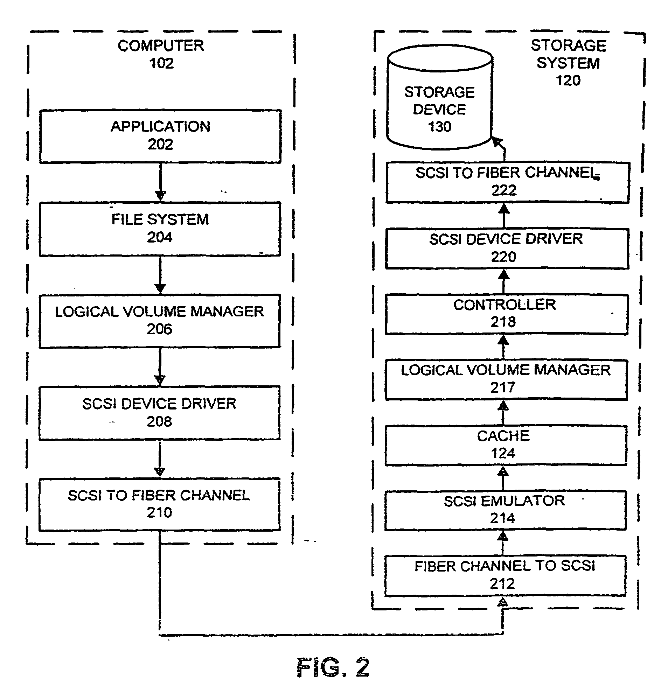

FIG. 2 illustrates system layers involved in performing a file system access wherein block-level commands are transferred to storage system 120 in accordance with an embodiment of the present invention. These layers are used during one mode of operation for storage system 120. During another mode of operation, storage system 120 can receive file system commands.

A number of layers are illustrated within computer 102. Application 202 first initiates a file system access by executing an instruction that causes a file system call. This file system access may include a read operation, a write operation, *or* any other type of file access or file maintenance operation. The file system access passes into file system 204, which converts the file system access into lower-level commands to access logical blocks of storage. Logical volume manager 206 receives these lower-level commands and converts them into even lower-level block access commands. Note that logical volume manager 206 may additionally perform mirroring for fault-tolerance purposes. Logical volume manager 206 passes the block-level commands to SCSI driver 208. SCSI driver 208 converts the block-level commands into a form that adheres to the SCSI protocol. SCSI driver 208 passes the commands through a layer that converts the SCSI protocol command into a form that is suitable for transmission over a communication link that adheres to the fiber channel communication protocol. Note that although on embodiment of the present invention is described in items of the SCSI protocol, the present invention can generally be used with other data transfer protocols.

Within storage system 120, the block-level command received from computer 102 across the fiber channel is converted back into a SCSI protocol command 212, and is then passed into SCSI emulator 214. SCSI emulator 214 provides an interface that appears to be a dumb SCSI device, such as a disk drive. Within SCSI emulator 214, the block-level command is converted into a format that allows the block to be looked up within cache 124. If the access request cannot be serviced from entirely within cache 124, the access request passes through logical volume manager 217 to controller 218. Controller 218 passes the access request through SCSI device driver 220 and through SCSI to fiber channel converter 222 before forwarding the request to storage device 130.

Note that a block level access can be serviced from cache 124 (without accessing storage device 130) if the block-level access is a read operation, and the requested block is present in cache 124. During a write operation, a block that is written into cache 124 will eventually be written back to storage device 130.

### Layers Involved in Sending File-Level Commands to Storage System

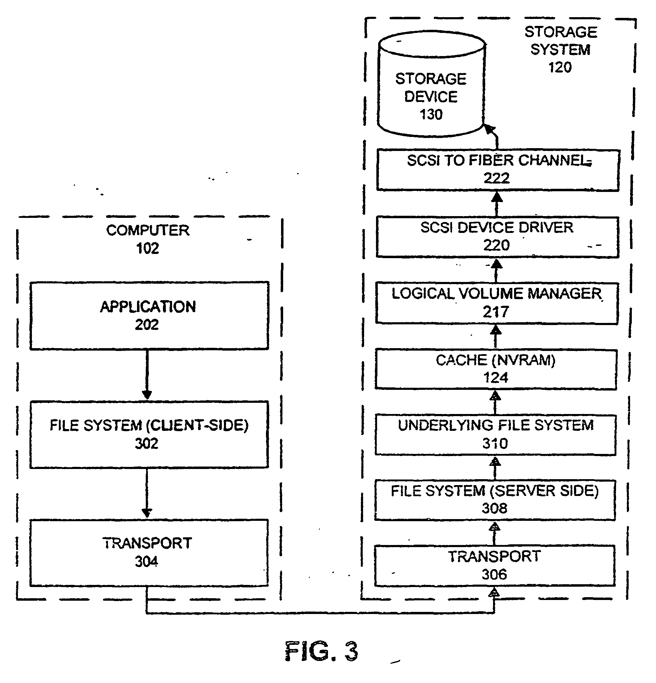

FIG. 3 illustrates system layers involved in performing a file system access wherein file-level commands are transferred to a storage device in accordance with an embodiment of the present invention. In this embodiment, application 202 generates a file system access and this access is passed into file system 302 (which is a client-side portion of a distributed file system). This file system access is immediately passed into transport layer 304, which packages the file system access for transport across a communication link from computer 102 to storage system 120.

Within storage system 120, the file system access passes through another transport layer which unpackages the file system access and then passes into file system 308 (which is a server-side portion of a distributed file system).

In one embodiment of the present invention, file system 302 (on the client side) and file system 308 (on the server side) act in concert to provide high availability. For example, suppose computer 102 fails during a file system operation. The highly available system allows a secondary backup computer, such as computer 103, to continue operating in place of computer 102. Note that the present invention also applies to computer systems that do not provide high availability.

File system 308 within storage system 120 passes the file system access to underlying file system 310. (Note that in general any file system can used the implement underlying file system 310.) Underlying file system 310 attempts to satisfy the file system request from cache 124. If a further access is required to storage device 130, the file system access is converted in a block-level request. This block-level request passes through logical volume manager 217 to SCSI device driver 220. Next, the block-level request passes through SCSI device driver 220 and is converted into a format suitable for transmission over a communication channel adhering to the fiber channel standard. This block-level request is then forwarded to storage device 130.

Note that the present invention allows for two modes of operation. A'first mode of operation (illustrated in FIG. 3) allows storage system 120 to accept higher-level file access commands. A second mode of operation (illustrated in FIG. 2) allows storage system 120 to accept lower-level block access commands.

The first mode of operation eliminates the work involved in converting an access request into a block-level form within computer 102, and then emulating a simple SCSI device with storage system 120, which converts the access into a higher-level form that is subsequently converted back down into a lower-level form before passing to storage device 130.

Instead, the first mode of operation sends the higher-level file system access directly to storage system 120 without first converting it into a block-level form.

### Access Formats

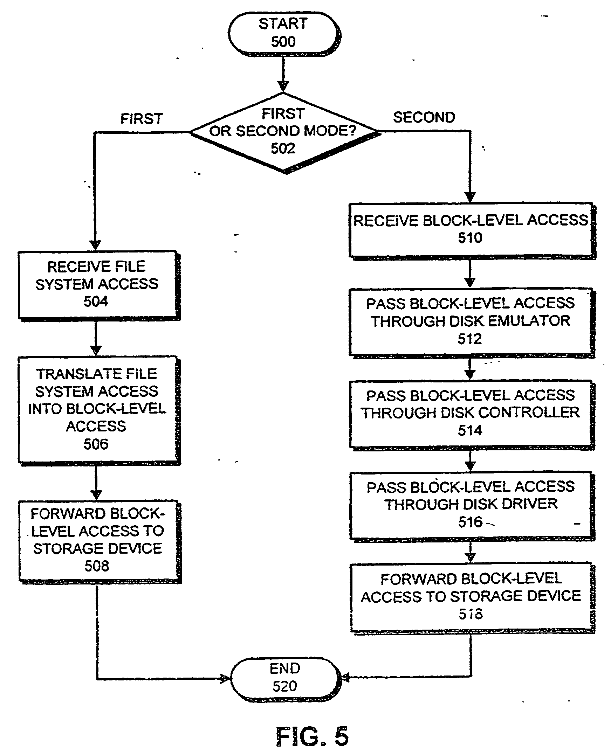

FIG. 4A illustrates some of the components that make up a file system access 401 in accordance with an embodiment of the present invention. File system access 401 includes file handle 402, offset 404 and length 406. File handle 402 is an identifier that facilitates referencing a file. Offset 404 specifies an offset into the file and length 406 specifies a length for the request. Note that this length 406 can specify a single byte or many megabytes. Hence, a single file access can generate one or more block accesses into a storage device.

FIG. 4B illustrates some of the components that make up a block-level access 409 in accordance with an embodiment of the present invention. Block-level access 409 includes disk number 408 and block number 410. Disk number 408 identifies a specific disk (or a specific storage device) and block number 410 specifies a particular block within the storage device. Note that block number 410 may specify a logical block or a physical block within a storage device.

Note that file system access 401 and block-level access 409 also include other components, which are not illustrated, such as an access type, which determines whether the access is a read operation or a write operation.

### Operation of Storage System

FIG. 5 is a flow chart illustrating operation of storage system 120 in accordance with an embodiment of the present invention.

The system first determines if it is configured to operate in a first mode of operation or a second mode of operation (step 502). in the first mode of operation, storage system 120 receives file system accesses, whereas in the second mode of operation, the file system receives block-level accesses.

The configuration process can take place at a number of different times. Configuration can take place when the physical components of a computer system are being integrated together. This can be accomplished by setting jumpers or switches to select a configuration. Configuration can also take place under program control during a system boot up operation. Configuration can additionally take place dynamically during computer system operation.

During the first mode of operation, storage system 120 receives a file system access (step 504). Storage system 120 translates the file system access 401 into a block-level access 409 (step 506). This block-level access 409 is subsequently forwarded to storage device 130 (step 508).

During the second mode of operation, storage system 120 receives a block-level access 409 (step 510). Block-level access 409 passes through SCSI emulator 214 (step 512) and through disk controller 218 (step 514). Block-level access 409 additionally passes through SCSI device driver 220 (step 516) before being forwarded to storage device 130 (step 518).

The foregoing descriptions of embodiments of the invention have been presented for purposes of illustration and description only. They are not intended to be exhaustive or to limit the invention to the forms disclosed. Accordingly, many modifications and variations will be apparent to practitioners skilled in the art. Additionally, the above disclosure is not intended to limit the invention. The scope of the invention is defined by the appended claims.

## Claims

1. A method for servicing access requests directed to a storage system (120) within a computer system, comprising:
if a controller (122; 123) within the storage system is operating in a first mode of operation,
receiving (504) a file system access (401) at the storage system,
translating (506) the file system access into a first block-level access (409), and
forwarding (508) the first block-level access to a storage device (130) within the storage system;
if the controller within the storage system is operating in a second mode of operation,
receiving 9510) a second block-level access (404) at the storage system, and
forwarding (518) the second block-level access to the storage device (130).

2. The method of claim 1, wherein receiving the file system access (401) includes receiving an identifier (402) for a file and an offset (404) into the file.

3. The method of claim 1 or claim 2, wherein receiving the file system access (401) includes receiving the file system access across a communication channel from a processor in the computer system.

4. The method of claim 3, wherein the communication channel conforms to the fiber channel standard.

5. A method according to any preceding claim, wherein forwarding the first block-level access (409) includes forwarding a device number (408) and a block number (410).

6. The method of claim 5, wherein the device number (408) identifies a disk within the storage system (120).

7. A method according to any preceding claim, wherein receiving the second block-level access includes receiving a second device number (408) and a second block number (410).

8. A method according to any preceding claim, wherein if the storage system is operating in the second mode of operation, the method further comprises:
after receiving the second block-level access (409) at the storage system (120),
passing the second block-level access through a block storage device emulator within the storage system;
passing the second block-level access through a cache (124; 125) for the storage device; and
if the second block-level access (409) cannot be serviced by the cache, passing the second block-level access through a driver (220) for the storage device (130) before forwarding the second block-level access to the storage device.

9. A method according to any preceding claim, wherein receiving the file system access at the storage system (302) includes receiving the file system access from a client-side portion of a file system; and
wherein translating the file system access into the first block-level access includes translating the file system access within a server-side portion of the file system.

10. A method according to any preceding claim, wherein the first block-level access conforms to the SCSI protocol standard.

11. A method according to any preceding claim, wherein the file system access conforms to the POSIX standard.

12. A method according to any preceding claim, wherein receiving the file system access includes receiving the file system access from one of a plurality of processors coupled to the storage system.

13. A method according to any preceding claim, wherein forwarding the first block-level access to the storage device includes mirroring the first block-level access for fault-tolerance purposes.

14. A method according to any preceding claim, wherein the file system access additionally includes an access length (406).

15. An apparatus for storing data for a computer system (102; 103; 104), comprising:
a storage system (120);
a first communication channel (108; 109; 110) that couples the storage system to the computer system;
a storage device within the storage system, including a non-volatile storage medium;
a second communication channel that couples the storage system to the storage device; and
a controller (122; 123) within the storage system coupled between the first communication channel and the second communication channel, for co-ordinating operation of the storage system;
wherein during a first mode of operation, the controller is configured to,
receive (504) a file system access (401) at the storage system,
translate (506) the file system access into a first block-level access (409),
forward (508) the first block-level access to the storage device;
wherein during a second mode of operation, the controller is configured to,
receive (510) a second block-level access (409) at the storage system, and
forward (518) the second block-level access to the storage device.

16. The apparatus of claim 15, wherein the file system access (401) includes an identifier (402) for a file and an offset (404) into the file.

17. The apparatus of claim 15 or claim 16, wherein the first block-level access (409) includes a device number (408) and a block number (410).

18. The apparatus of claim 17, wherein the device number (408) identifies a disk within the storage system (120).

19. An apparatus according to any one of claims 15 to 18, wherein the second block-level access includes a second device number (408) and a second block number (410).

20. An apparatus according to any one of claims 15 to 19, wherein if the storage system is operating in the second mode of operation, the controller is further configured to:
pass the second block-level access through a block storage device emulator within the storage system; and
if the second block level-access cannot be serviced within the cache (124, 125), to pass the second block-level access through a driver for the storage device before forwarding the second block-level access to the storage device.

21. The apparatus according to any one of claims 15 to 20, further comprising a server-side portion of a file system within the storage device, and wherein the controller is configured to receive the file system access from a corresponding client-side portion of the file system.

22. The apparatus according to any one of claims 15 to 21, wherein the first communication channel conforms to the fiber channel standard.

23. The apparatus according to any one of claims 15 to 22, wherein the first block-level access conforms to the SCSI protocol standard.

24. The apparatus according to any one of claims 15 to 23, wherein the file system access conforms to the POSIX standard.

25. The apparatus according to any one of claims 15 to 24, further comprising a third communication channel that couples the storage device to a second computer system.

26. The apparatus according to any one of claims 15 to 25, wherein the controller is configured to mirror the first block-level access for fault-tolerance purposes.

27. The apparatus according to any one of claims 15 to 26, wherein the file system access additionally includes an access length.

28. A computer readable storage medium storing instructions that when executed by a controller (122; 123) within a storage system (120) cause the controller to perform a method for servicing access requests directed to the storage system according to any one of claims 1 to 14

## Patentansprüche

1. Verfahren für das Management von Zugriffsanforderungen, die an ein Speichersystem (120) in einem Computersystem gerichtet werden, das umfaßt:
falls ein Controller (122; 123) in dem Speichersystem in einer ersten Betriebsart arbeitet:
Empfangen (504) eines Dateisystemzugriffs (401) bei dem Speichersystem,
Übersetzen (506) des Dateisystemzugriffs in einen Zugriff (409) auf der Ebene eines ersten Blocks, und
Weiterlelten (508) des Zugriffs auf der Ebene eines ersten Blocks zu einer Speichervorrichtung (130) in dem Speichersystem;
falls der Controller in dem Speichersystem in einer zweiten Betriebsart arbeitet:
Empfangen (510) eines Zugriffs (404) auf der Ebene eines zweiten Blocks bei dem Speichersystem und
Weiterleiten (518) des Zugriffs auf der Ebene eines zweiten Blocks zu der Speichervorrichtung (130).

2. Verfahren nach Anspruch 1, bei dem das Empfangen des Dateisystemzugriffs (401) das Empfangen einer Kennung (402) für eine Datei und einer Verschiebung (404) in die Datei umfaßt.

3. Verfahren nach Anspruch 1 oder Anspruch 2, bei dem das Empfangen des Dateisystemzugriffs (401) das Empfangen des Dateisystemzugriffs über einen Kommunikationskanal von einem Prozessor im Computersystem umfaßt.

4. Verfahren nach Anspruch 3, bei dem der Kommunikationskanal der Faserkanal-Norm genügt.

5. Verfahren nach einem vorhergehenden Anspruch, bei dem das Weiterleiten des Zugriffs (409) auf der Ebene eines ersten Blocks das Weiterleiten einer Vorrichtungsnummer (408) und einer Blocknummer (410) umfaßt.

6. Verfahren nach Anspruch 5, bei dem die Vorrichtungsnummer (408) eine Platte in dem Speichersystem (120) identifiziert.

7. Verfahren nach einem vorhergehenden Anspruch, bei dem das Empfangen des Zugriffs auf der Ebene eines zweiten Blocks das Empfangen einer zweiten Vorrichtungsnummer (408) und einer zweiten Blocknummer (410) umfaßt.

8. Verfahren nach einem vorhergehenden Anspruch, wobei das Verfahren dann, wenn das Speichersystem in der zweiten Betriebsart arbeitet, femer umfaßt
nach dem Empfangen des Zugriffs (409) auf der Ebene eines zweiten Blocks bei dem Speichersystem (120) Schicken des Zugriffs auf der Ebene eines zweiten Blocks durch einen Blockspeichervorrichtungsemulator in dem Speichersystem;
Schicken des Zugriffs auf der Ebene eines zweiten Blocks durch einen Cache-Speicher (124; 125) für die Speichervorrichtung; und
falls der Zugriff (409) auf der Ebene eines zweiten Blocks durch den Cache-Speicher nicht gemanagt werden kann, Schicken des Zugriffs auf der Ebene eines zweiten Blocks durch einen Treiber (220) für die Speichervorrichtung (130), bevor der Zugriff auf der Ebene eines zweiten Blocks zu der Speichervorrichtung weitergeleitet wird.

9. Verfahren nach einem vorhergehenden Anspruch, bei dem das Empfangen des Dateisystemzugriffs bei dem Speichersystem (302) das Empfangen des Dateisystemzugriffs von einem client-seitigen Abschnitt eines Dateisystems umfaßt; und
wobei das Übersetzen des Dateisystemzugriffs in den Zugriff auf der Ebene eines ersten Blocks das Übersetzen des Dateisystemzugriffs in einem serverseitigen Abschnitt des Dateisystems umfaßt.

10. Verfahren nach einem vorhergehenden Anspruch, bei dem der Zugriff auf der Ebene eines ersten Blocks der SCSI-Protokoll-Norm genügt.

11. Verfahren nach einem vorhergehenden Anspruch, bei dem der Dateisystemzugriff der POSIX-Norm genügt.

12. Verfahren nach einem vorhergehenden Anspruch, bei dem das Empfangen des Dateisystemzugriffs das Empfangen des Dateisystemzugriffs von einem von mehreren Prozessoren, die mit dem Speichersystem gekoppelt sind, umfaßt.

13. Verfahren nach einem vorhergehenden Anspruch, bei dem das Weiterleiten des Zugriffs auf der Ebene eines ersten Blocks zu der Speichervorrichtung das Spiegeln des Zugriffs auf der Ebene eines ersten Blocks für Fehlertoleranzzwecke umfaßt.

14. Verfahren nach einem vorhergehenden Anspruch, bei dem der Dateisystemzugriff außerdem eine Zugriffslänge (406) enthält.

15. Vorrichtung zum Speichem von Daten für ein Computersystem (102; 103; 104), die umfaßt:
ein Speichersystem (120);
einen ersten Kommunikationskanal (108; 109; 110), der das Speichersystem mit dem Computersystem koppelt:
eine Speichervorrichtung in dem Speichersystem, die ein nichtflüchtiges Speichermedium enthält;
einen zweiten Kommunikationskanal, der das Speichersystem mit der Speichervorrichtung koppelt; und
einen Controller (122; 123) in dem Speichersystem, der zwischen den ersten Kommunikationskanal und den zweiten Kommunikationskanal gekoppelt ist, um die Operation des Speichersystems zu koordinieren;
wobei der Controller in einer ersten Betriebsart so konfiguriert ist, daß er
einen Dateisystemzugriff (401) bei dem Speichersystem empfängt (504),
den Dateisystemzugriff in einen Zugriff (409) auf der Ebene eines ersten Blocks übersetzt (506),
den Zugriff auf der Ebene eines ersten Blocks zu der Speichervorrichtung weiterleitet (508);
wobei der Controller in einer zweiten Betriebsart so konfiguriert ist, daß er
elnen Zugriff (409) auf der Ebene eines zweiten Blocks bei dem Speichersystem empfängt (510) und
den Zugriff auf der Ebene eines zweiten Blocks zu der Speichervorrichtung weiterleitet (518).

16. Vorrichtung nach Anspruch 15, bei der der Dateisystemzugriff (401) eine Kennung (402) für eine Datei und eine Verschiebung (404) in die Datel umfaßt.

17. Vorrichtung nach Anspruch 15 oder Anspruch 16, bei der der Zugriff (409) auf der Ebene eines ersten Blocks eine Vorrichtungsnummer (408) und eine Blocknummer (410) umfaßt.

18. Vorrichtung nach Anspruch 17, bei der die Vorrichtungsnummer (408) eine Platte In dem Speichersystem (120) identifiziert.

19. Vorrichtung nach einem der Ansprüche 15 bis 18, bei der der Zugriff auf der Ebene eines zweiten Blocks eine zweite Vorrichtungsnummer (408) und eine zweite Blocknummer (410) umfaßt.

20. Vorrichtung nach einem der Ansprüche 15 bis 19, bei der der Controller dann, wenn das Speichersystem in der zweiten Betriebsart arbeitet, ferner so konfiguriert ist, daß er:
den Zugriff auf der Ebene eines zweiten Blocks durch einen Blockspeichervorrichtungsemulator in dem Speichersystem schickt; und
dann, wenn der Zugriff auf der Ebene eines zweiten Blocks nicht in dem Cache-Speicher (124, 125) gemanagt werden kann, den Zugriff auf der Ebene eines zweiten Blocks durch einen Treiber für die Speichervorrichtung schickt, bevor er den Zugriff auf der Ebene eines zweiten Blocks zu der Speichervorrichtung weiterteitet.

21. Vorrichtung nach einem der Ansprüche 15 bis 20, die ferner einen serverseitigen Abschnitt eines Dateisystems in der Speichervorrichtung umfaßt, wobei der Controller so kontiguriert ist, daß er den Datsisystemzugriff von einem entsprechenden client-seitigen Abschnitt des Dateisystems empfängt.

22. Vorrichtung nach einem der Ansprüche 15 bis 21, bei der der erste Kommunikationskanal der Faserkanal-Norm genügt.

23. Vorrichtung nach einem der Ansprüche 15 bis 22, bei der der Zugriff auf der Ebene eines ersten Blocks der SCSI-Protokoll-Norm genügt.

24. Vorrichtung nach einem der Ansprüche 15 bis 23, bei der der Dateisystemzugriff der POSIX-Norm genügt.

25. Vorrichtung nach einem der Ansprüche 15 bis 24, die ferner einen dritten Kommunikationskanal umfaßt, der die Speichervorrichtung mit einem zweiten Computersystem koppelt.

26. Vorrichtung nach einem der Ansprüche 15 bis 25, bei der der Controller so konfiguriert ist, daß er den Zugriff auf der Ebene eines ersten Blocks für Fehlertoleranzzwecke spiegelt.

27. Vorrichtung nach einem der Ansprüche 15 bis 26, bei der der Dateisystemzugriff weiterhin eine Zugriffslänge enthält.

28. Computerlesbares Speichermedium, das Befehle speichert, die, wenn sie von einem Controller (122; 123) in einem Speichersystem (120) ausgeführt werden, den Controller dazu veranlassen, daß er ein Verfahren nach einem der Ansprüche 1 bis 14 für das Management von an das Speichersystem gerichteten Zugriffsanforderungen ausführt.

## Revendications

1. Procédé de traitement de demandes d'accès dirigées vers un système de mémoire (120) à l'intérieur d'un système informatique, comprenant:
si une unité de commande (122 ; 123) à l'intérieur du système de mémoire est activée dans un premier mode de fonctionnement,
la réception (504) d'un accès de système de fichiers (401) sur le système de mémoire,
la conversion (506) de l'accès de système de fichiers en un premier accès au niveau bloc (409), et
la transmission (508) du premier accès au niveau bloc à un dispositif de mémorisation (130) à l'intérieur du système de mémoire ;
si l'unité de commande à l'intérieur du système de mémoire est activée dans un second mode de fonctionnement,
la réception (510) d'un second accès au niveau bloc (404) sur le système de mémoire, et
la transmission (518) du second accès au niveau bloc au dispositif de mémorisation (130).

2. Procédé selon la revendication 1, dans lequel la réception de l'accès de système de fichiers (401) comporte la réception d'un identificateur (402) d'un fichier et d'un décalage (404) dans le fichier.

3. Procédé selon la revendication 1 ou la revendication 2, dans lequel la réception de l'accès de système de fichiers (401) comporte la réception de l'accès de système de fichiers à travers un canal de communication à partir d'une unité de traitement dans le système informatique.

4. Procédé selon la revendication 3, dans lequel le canal de communication se conforme au standard de canal à fibre optique.

5. Procédé selon l'une quelconque des revendications précédentes, dans lequel la transmission du premier accès au niveau bloc (409) comporte la transmission d'un numéro de dispositif (408) et d'un numéro de bloc (410).

6. Procédé selon la revendication 5, dans lequel le numéro de dispositif (408) identifie un disque à l'intérieur du système de mémoire (120).

7. Procédé selon l'une quelconque des revendications précédentes, dans lequel la réception du second accès au niveau bloc comporte la réception d'un second numéro de dispositif (408) et d'un second numéro de bloc (410).

8. Procédé selon l'une quelconque des revendications précédentes, dans lequel, si le système de mémoire est activé dans le second mode de fonctionnement, le procédé comprend, en outre:
après réception du second accès au niveau bloc (409) sur le système de mémoire (120),
la transmission du second accès au niveau bloc par l'intermédiaire d'un élément de simulation de dispositif de mémorisation de bloc à l'intérieur du système de mémoire ;
la transmission du second accès au niveau bloc par l'intermédiaire d'une antémémoire (124; 125) pour le dispositif de mémorisation ; et
si le second accès au niveau bloc (409) ne peut pas être traité par l'antémémoire, la transmission du second accès au niveau bloc par l'intermédiaire d'un gestionnaire (220) du dispositif de mémorisation (130) avant de transmettre le second accès au niveau bloc au dispositif de mémorisation.

9. Procédé selon l'une quelconque des revendications précédentes, dans lequel la réception de l'accès de système de fichiers sur le système de mémoire (302) comporte la réception de l'accès de système de fichiers à partir d'une partie du côté client d'un système de fichiers ; et
dans lequel la conversion de l'accès de système de fichiers en le premier accès au niveau bloc comporte la conversion de l'accès de système de fichiers à l'intérieur d'une partie du côté serveur du système de fichiers.

10. Procédé selon l'une quelconque des revendications précédentes, dans lequel le premier accès au niveau bloc se conforme au standard de protocole SCSI.

11. Procédé selon l'une quelconque de revendications précédentes, dans lequel l'accès de système de fichiers se conforme au standard POSIX.

12. Procédé selon l'une quelconque de revendications précédentes, dans lequel la réception de l'accès de système de fichiers comporte la réception de l'accès de système de fichiers à partir d'une unité d'une pluralité d'unités de traitement couplées au système de mémoire.

13. Procédé selon l'une quelconque des revendications précédentes, dans lequel la transmission du premier accès au niveau bloc vers le dispositif de mémorisation comporte la création d'une copie du premier accès au niveau bloc pour des besoins de tolérance aux défauts.

14. Procédé selon l'une quelconque des revendications précédentes, dans lequel l'accès de système de fichiers comporte, en outre, une longueur d'accès (406).

15. Dispositif destiné à mémoriser des données pour un système informatique (102 ; 103 ; 104), comprenant:
un système de mémoire (120);
un premier canal de communication (108; 109 ; 110) qui couple le système de mémoire au système informatique ;
un dispositif de mémorisation à l'intérieur du système de mémoire, comportant un milieu de mémorisation non volatile ;
un second canal de communication qui couple le système de mémoire au dispositif de mémorisation ; et
une unité de commande (122; 123) à l'intérieur du système de mémoire couplé entre le premier canal de communication et le second canal de communication, afin de coordonner le fonctionnement du système de mémoire ;
dans lequel, dans un premier mode de fonctionnement, l'unité de commande est configurée de manière à :
recevoir (504) un accès de système de fichiers (401) sur le système de mémoire,
convertir (506) l'accès de système de fichiers en un premier accès au niveau bloc (409),
transmettre (508) le premier accès au niveau bloc au dispositif de mémorisation ;
dans lequel, dans un second mode de fonctionnement, l'unité de commande est configurée de manière à :
recevoir (510) un second accès au niveau bloc (409) sur le système de mémoire, et
transmettre (518) le second accès au niveau bloc vers le dispositif de mémorisation.

16. Dispositif selon la revendication 15, dans lequel l'accès de système de fichiers (401) comporte un élément d'identification (402) d'un fichier et un décalage (404) dans le fichier.

17. Dispositif selon la revendication 15 ou la revendication 16, dans lequel le premier accès au niveau bloc (409) comporte un numéro de dispositif (408) et un numéro de bloc (410).

18. Dispositif selon la revendication 17, dans lequel le numéro de dispositif (408) identifie un disque à l'intérieur du système de mémoire (120).

19. Dispositif selon l'une quelconque des revendications 15 à 18, dans lequel le second accès au niveau bloc comporte un second numéro de dispositif (408) et un second numéro de bloc (410).

20. Dispositif selon l'une quelconque des revendications 15 à 19, dans lequel, si le système de mémoire est activé dans le second mode de fonctionnement, l'unité de commande est, en outre, configurée de manière à
transmettre le second accès au niveau bloc par l'intermédiaire d'un élément de simulation de dispositif de mémorisation de bloc à l'intérieur du système de mémoire ; et
si le second accès au niveau bloc ne peut pas être traité à l'intérieur de l'antémémoire (124, 125), à transmettre le second accès au niveau bloc par l'intermédiaire d'un gestionnaire du dispositif de mémorisation avant de transmettre le second accès au niveau bloc au dispositif de mémorisation.

21. Dispositif selon l'une quelconque des revendications 15 à 20, comprenant, en outre, une partie du côté serveur d'un système de fichiers à l'intérieur du dispositif de mémorisation, et dans lequel l'unité de commande est configurée de manière à recevoir l'accès de système de fichiers à partir d'une partie du côté client correspondante du système de fichiers.

22. Dispositif selon l'une quelconque des revendications 15 à 21, dans lequel le premier canal de communication se conforme au standard de canal à fibre optique.

23. Dispositif selon l'une quelconque des revendications 15 à 22, dans lequel le premier accès un niveau bloc se conforme au standard de protocole SCSI.

24. Dispositif selon l'une quelconque des revendications 15 à 23, dans lequel l'accès de système de fichiers se conforme au standard POSIX.

25. Dispositif selon l'une quelconque des revendications 15 à 24, comprenant, en outre, un troisième canal de communication qui couple le dispositif de mémorisation à un second système informatique.

26. Dispositif selon l'une quelconque des revendications 15 à 25, dans lequel l'unité de commande est configurée de manière à créer une copie du premier accès au niveau bloc pour des besoins de tolérance aux défauts.

27. Dispositif selon l'une quelconque des revendications 15 à 26, dans lequel l'accès de système de fichiers comporte, en outre, une longueur d'accès.

28. Support de mémorisation pouvant être lu par ordinateur mémorisant des instructions qui, lorsqu'elles sont exécutées par une unité de commande (122, 123) à l'intérieur d'un système de mémoire (120) provoquent l'exécution, par l'unité de commande, d'un procédé de traitement de demandes d'accès dirigées vers le système de mémoire selon l'une quelconque des revendications 1 à 14.
